# EUROPÄISCHE PATENTANMELDUNG

(11) **EP 2 525 473 A2**
(43) Veröffentlichungstag der Anmeldung: **21.11.2012**
(21) Anmeldenummer: 12168203.3
(22) Anmeldetag: 16.05.2012
(51) Int. Cl.: H02K 1/20

(54) **Stator und Generator mit einem Stator**

(30) Priorität: 17.05.2011 DE 202011050160 U
(71) Anmelder: Lloyd Dynamowerke GmbH & Co. KG, 28207 Bremen (DE)
(72) Erfinder:
(74) Vertreter: Tappe, Udo

(57) **Zusammenfassung**

Bei einem Stator (10), insbesondere für einen Generator und/oder zum Zusammenwirken mit einem Rotor, mit einem Statorgrundkörper (11), und mit einer Kühlvorrichtung (15), die mindestens einen Kühlkanal (16) zum Kühlen des Statorgrundkörpers (11) und/oder von Statorwicklungen umfasst, wobei der Kühlkanal (16) in dem Statorgrundkörper (11) eingelassen und von Statormaterial des Statorgrundkörpers (11) umschlossen ist, wird die Kühlwirkung verbessert und bei einem Generator mit einem solchen Stator werden die Energieverluste vermindert und der Wirkungsgrad erhöht, wenn der Kühlkanal (16) im Bereich seines Außenumfangs (17) einen Spalt aufweist.

## Beschreibung

Die Erfindung betrifft einen Stator, insbesondere für einen Generator und/oder zum Zusammenwirken mit einem Rotor, mit einem Statorgrundkörper, und mit einer Kühlvorrichtung, die mindestens einen Kühlkanal zum Kühlen des Statorgrundkörpers und/oder von Statorwicklungen umfasst, wobei der Kühlkanal in dem Statorgrundkörper eingelassen und von Statormaterial des Statorgrundkörpers umschlossen ist.

Ein derartiger Stator ist aus der EP 2 003 764 A2 bekannt. Hier wird ein Schienenfahrzeug-Direktantrieb mit einer Statorkühlung als Kühlvorrichtung offenbart. Der Stator umfasst ein Statorblechpaket, in dessen Nuten Statorwicklungen eingelegt sind. Durch das Blechpaket verlaufen Kühlrohre durch Löcher in den einzelnen Blechlamellen. Durch die Kühlrohre kann eine Kühlflüssigkeit geleitet werden. Die Kühlflüssigkeit wird den Kühlrohren mittels eines in dem Statorgrundkörper eingelassenen und von Statormaterial umschlossenen Kanals zugeführt und mittels eines weiteren in dem Statorgrundkörper eingelassenen und von Statormaterial umschlossenen Kanals wieder abgeführt. Aufgrund der erreichbaren Kühlung des Stators und/oder des Blechpakets ist ein höherer Wirkungsgrad eines entsprechend ausgestatteten Antriebs erreichbar.

Bei bekannten Statoren sind Kühlrohre bzw. Kühlleitungen in den Statorgrundkörper eingelassen und der Außenumfang bzw. die Außenseite der Kühlrohre bzw. Kühlleitungen ist von dem Statormaterial des Statorgrundkörpers vollständig umschlossen. Hierdurch sind kompakte Bauweisen möglich, da beispielsweise ein separates Bauelement mit einer Kühlvorrichtung, in das ein Statorblechpaket eingepasst wird, verzichtbar ist.

Werden jedoch metallische Kühlrohre bzw. Kühlleitungen verwendet, so ist von Nachteil, dass, beispielsweise bei der Verwendung in einem Drehstromgenerator, Strom in den Kühlrohren induziert wird. Die metallischen Kühlleitungen wirken, insbesondere bei Drehstrommaschinen, wie eine Wicklung und werden von einem alternierenden Magnetfeld umschlossen. Aufgrund des alternierenden Magnetfeldes werden in den elektrisch leitfähigen metallischen Kühlrohren bzw. Kühlleitungen, beispielsweise aus Kupfer, etc., bei einer Verwendung des Stators in einem Generator Ströme induziert, die zu einem Energieverlust und damit zu einem geringeren Wirkungsgrad führen.

Im Hinblick auf die Kühlrohre bzw. Kühlleitungen sollte kein metallisches Material, beispielsweise Kupfer, etc., verwendet werden, um Energieverluste und einen geringeren Wirkungsgrad zu vermeiden. Hierbei ist von Nachteil, dass die hohe Wärmeleitfähigkeit von metallischen Materialen, wie beispielsweise Kupfer, etc., für eine bessere Kühlung nicht nutzbar ist.

Es ist somit das der Erfindung zugrunde liegende Problem, einen Stator der eingangs genannten Art derart weiter zu entwickeln, dass die Kühlwirkung verbessert wird und bei einem Generator mit einem solchen Stator die Energieverluste vermindert werden und der Wirkungsgrad erhöht wird.

Das der Erfindung zugrunde liegende Problem wird durch einen Stator der eingangs genannten Art gelöst, der dadurch gekennzeichnet ist, dass der Kühlkanal im Bereich seines Außenumfangs einen Spalt aufweist.

Die Kühlvorrichtung umfasst somit einen Kühlkanal, der in dem Statorgrundkörper eingelassen bzw. eingebettet und vom Statormaterial im Wesentlichen umschlossen ist. Der Außenumfang des Kühlkanals weist jedoch einen Spalt als Materiallücke im Statorgrundkörper auf. Der Spalt kann beispielsweise als ein Schlitz ausgebildet sein. In einen derartigen Kühlkanal ist eine Kühlleitung einsetzbar. Aufgrund des Spalts können sich die magnetischen Flüsse nicht ungehindert in dem Statormaterial um die Kühlleitung herum schließen. Durch den Spalt sind somit die Verluste durch in der Kühlleitung induzierte Ströme reduzierbar. Zugleich wird die Kühlwirkung aufgrund der Verwendbarkeit von Kühlleitungen mit einer hohen Wärmeleitfähgkeit verbessert. Da mit Ausnahme des schmalen Bereichs des Spalts fast der gesamte Umfang der Kühlleitung bzw. die Außenseite der Kühlleitung in Kontakt mit einer Innenseite des Kühlkanals bringbar ist, wird hierdurch die Kühlleistung gegenüber der Verwendung von beispielsweise U-förmigen Kanälen etwa verdoppelt. Aufgrund dieser Effekte ist der Wirkungsgrad, beispielsweise eines Drehstromgenerators mit einem solchen Stator, verbessert.

Nach einer weiteren Ausführungsform ist die Breite des Spalts kleiner als der Durchmesser des Kühlkanals, wobei vorzugsweise die Breite des Spalts kleiner als 10 mm, insbesondere kleiner als 5 mm, ist. Durch eine möglichst geringe Breite des Spalts wird einerseits eine hinreichende Behinderung der Entstehung von induzierten Strömen und andererseits eine möglichst gute Kühlwirkung aufgrund einer großen Kontaktfläche zwischen der Kühlleitung und der Innenseite des Kühlkanals realisierbar.

Vorzugsweise ist der Kühlkanal, insbesondere beim Zusammenwirken mit einem Rotor, in einem magnetisch beeinflussbaren Bereich des Statorgrundkörpers angeordnet. Hierdurch lassen sich besonders kompakte Bauweisen realisieren. Des Weiteren wird hierdurch die Kühlwirkung der Kühlvorrichtung verbessert. Der Kühlkanal und/oder die Kühlleitung sind vorzugsweise in einem magnetisch aktivierten Bereich des Statorgrundkörpers angeordnet. Somit wird die Kühlvorrichtung unmittelbar dort eingesetzt, wo die abzuführende Wärme entsteht.

Nach einer weiteren Ausführungsform erstreckt sich der Spalt, insbesondere über die gesamte in dem Statorgrundkörper eingelassene Länge des Kühlkanals, in Längsrichtung des Kühlkanals in dem Statorgrundkörper. Hierdurch ist gewährleistet, dass sich ein Magnetfeld in keinem Bereich des Kühlkanals ungehindert, beispielsweise um eine in dem Kühlkanal anordenbare metallische Kühlleitung, ausbilden kann.

Gemäß einer Weiterbildung erstreckt sich der Spalt von einer Innenseite des Kühlkanals bis zu einer Außenseite des Stators. Hierdurch ist gewährleistet, dass sich magnetische Feldlinien um den Kühlkanal und/oder eine in dem Kühlkanal anordenbare Kühlleitung nicht schließen können. Dadurch können sich nur deutlich geringere Induktionsströme in den Kühlleitungen ausbilden. Vorzugsweise ist der Spalt als ein Luftspalt ausgebildet. Die über den Luftspalt hinweg übertragenen magnetischen Flüsse sind etwa um eine Größenordnung geringer als im Falle eines Stators ohne Luftspalt. Hierdurch werden Verluste, beispielsweise bei einem Generator, aufgrund von induzierten Strömen erheblich reduziert. Alternativ kann der Spalt auch mit einem Füllmaterial mit einer geringen magnetischen Permeabilität, insbesondere einem nichtmetallischem und/oder nicht magnetischem Material, ausgefüllt werden. Hierdurch ist eine höhere Festigkeit und/oder Steifigkeit des Stators erreichbar.

Vorzugsweise ist in dem Kühlkanal eine Kühlleitung, insbesondere aus Kupfer, für ein Kühlmittel angeordnet. Die Kühlleitung, insbesondere ein Kühlrohr, ist derart in dem Kühlkanal angeordnet, dass der Außenumfang und/oder die Außenseite der Kühlleitung am Innenumfang und/oder der Innenseite des Kühlkanals anliegt. Hierdurch wird ein Wärmeaustausch zwischen dem in der Kühlleitung fließendem Kühlmittel und dem Stator begünstigt. Aufgrund ihrer hohen Wärmeleitfähigkeit und/oder guten Verarbeitungsmöglichkeiten sind Kühlleitungen aus Kupfer besonders vorteilhaft. Die Kühlleitung kann mittels eines Presssitzes fest in dem Kühlkanal positioniert sein. Vorzugsweise wird die Kühlleitung in den Kühlkanal eingewalzt. Als Kühlmittel kann ein Fluid, beispielsweise eine Flüssigkeit eingesetzt werden. Insbesondere Wasser eignet sich als günstig zu beschaffendes Kühlmittel.

Nach einer weiteren Ausführungsform sind mehrere Kühlkanäle und/oder Kühlleitungen parallel nebeneinander angeordnet. Aufgrund der Verwendung mehrerer Kühlkanäle und/oder Kühlleitungen wird die Kühlwirkung der Kühlvorrichtung weiter verbessert. Durch die Anordnung der Kühlkanäle und/oder Kühlleitungen parallel nebeneinander ist gewährleistet, dass die Materiallücke für jeden Kühlkanal ausbildbar ist, ohne dass sich diese gegenseitig stören.

Nach einer Weiterbildung umfasst der Statorgrundkörper ein Statorblechpaket, dass vorzugsweise eine, insbesondere zylinderförmige, Aufnahme zum Anordnen eines Rotors aufweist. Hierbei können Blechlamellen parallel zueinander um die Aufnahme angeordnet sein. Die Blechlamellen sind vorzugsweise hinsichtlich ihrer Längsausrichtung radial um die Aufnahme nebeneinander angeordnet. Dabei sind Flächen von unmittelbar nebeneinander angeordneten Blechlamellen einander zugewandt. Die Ausbildung eines Stators mit einem Statorblechpaket hat sich, beispielsweise für einen Drehstromgenerator zum Erzeugen elektrischer Energie, bewährt. Hierbei kann die Aufnahme als eine, insbesondere zylinderförmige, Öffnung ausgebildet sein. Die Aufnahme und/oder Öffnung ist vorzugsweise mittig in dem Stator angeordnet. Die Blechlamellen können die Aufnahme ringförmig umgeben. In der Aufnahme und/oder Öffnung ist ein um eine Rotationsachse drehbarer Rotor anordenbar.

Der Kühlkanal und/oder die Kühlleitung können in Axialrichtung zu einer Rotationsachse des Rotors angeordnet sein. Hierdurch ist eine für eine möglichst optimale Kühlwirkung geeignete Verteilung bzw. Anordnung der Kühlleitungen in dem Stator und/oder in Bezug auf die Blechlamellen erreichbar. Vorzugsweise treten die voneinander abgewandten Enden der Kühlleitung aus dem Statorgrundkörper aus. Mittels der aus dem Statorgrundkörper austretenden Abschnitte der Kühlleitung ist Luft um den Stator, insbesondere innerhalb eines Generators, kühlbar. Vorzugsweise sind die austretenden Abschnitte als, insbesondere U-förmige, Umlenkungen ausgebildet. Mittels der aus dem Statorgrundkörper austretenden Abschnitte der Kühlleitung wird vorzugsweise ein Kühlluftstrom gekühlt, der zum Kühlen von Wicklungen, insbesondere von Wickelköpfen der Wicklungen, vorgesehen ist.

Des Weiteren kann der Spalt an der von der Aufnahme abgewandten Seite des Kühlkanals und/oder der Kühlleitung, insbesondere radial nach außen gerichtet, angeordnet sein. Hierdurch lässt sich der Spalt besonders einfach in den Statorgrundkörper bzw. das Statormaterial, beispielsweise mittels Schlitzen, einbringen. Zudem wird der Stator hinsichtlich seiner Festigkeit, Steifigkeit und/oder Belastbarkeit im Bereich der Aufnahme und/oder Blechlamellen durch ein Vorsehen des Spalts im Bereich einer Außenseite des Stators und/oder Statorgrundkörpers nicht beeinträchtigt.

Der Stator, insbesondere das Statorblechpaket, kann in einem Gehäuse angeordnet sein. Als Material für das Gehäuse ist ein nichtmagnetischer Werkstoff, insbesondere Aluminium, von Vorteil. Hierdurch werden die Ausbildung eines magnetischen Flusses und damit die Entstehung von Wirbelströmen in dem Gehäuse vermieden. Vorzugsweise ist das Statorblechpaket in das Gehäuse eingeschrumpft, wodurch ein fester Sitz des Statorblechpakets in dem Gehäuse gewährleistet ist.

Ein Generator, insbesondere ein Drehstromgenerator, zum Erzeugen von elektrischer Energie kann einen erfindungsgemäßen Stator und einen mit dem Stator zusammenwirkenden Rotor aufweisen. Aufgrund der verbesserten Kühlung durch die Verwendbarkeit von metallischen Kühlleitungen mit einer hohen Wärmeleitfähigkeit ist der Wirkungsgrad des Generators gegenüber Generatoren mit Kühlleitungen geringerer Wärmeleitfähigkeit verbessert. Hierbei bilden sich aufgrund des Spalts nur schwache Magnetfelder um die Kühlleitungen. Entsprechend gering sind die Verluste aufgrund von induzierten Strömen, wodurch der Wirkungsgrad des Generators ebenfalls verbessert ist. Ein Drehstromgenerator kann als ein Windenergiegenerator oder ein Wasserkraftgenerator ausgebildet sein.

Besonders vorteilhaft ist eine Drehstrommaschine, insbesondere eine Windenergieanlage, mit einem solchen Generator. Bei derartigen Drehstrommaschinen, wie beispielsweise Generatoren und/oder Antrieben, wird das Drehfeld im Stator wechselnd magnetisiert. Der erfindungsgemäße Stator und/oder Drehstromgenerator führt zu einer Wirkungsgraderhöhung. Dies wiederum führt zu größeren Energieerträgen bei der Drehstrommaschine, wie beispielsweise bei einer Windenergieanlage. Die Investitionskosten für eine Windenergieanlage sind von den erreichbaren Energieerträgen und/oder der Leistung der Windenergieanlage abhängig. Somit sind die leistungsspezifischen Investitionskosten reduzierbar. In die leistungsspezifischen Investitionskosten gehen die gesamten Kosten einer Windenergieanlage ein, die in der Regel ein Vielfaches der Generatorkosten betragen. Daher sind bereits geringe Wirkungsgradsteigerungen, beispielsweise von wenigen Zehnteln, von erheblicher wirtschaftlicher Bedeutung.

Nachfolgend wird die Erfindung anhand der Figuren näher erläutert. Es zeigen:
- Fig. 1: eine perspektivische Seitenansicht eines erfindungsgemäßen Stators,
- Fig. 2: einen Ausschnitt einer perspektivischen Ansicht des erfindungsgemäßen Stators gemäß Fig.1, und
- Fig. 3: einen Ausschnitt einer perspektivischen Ansicht eines weiteren erfindungsgemäßen Stators.

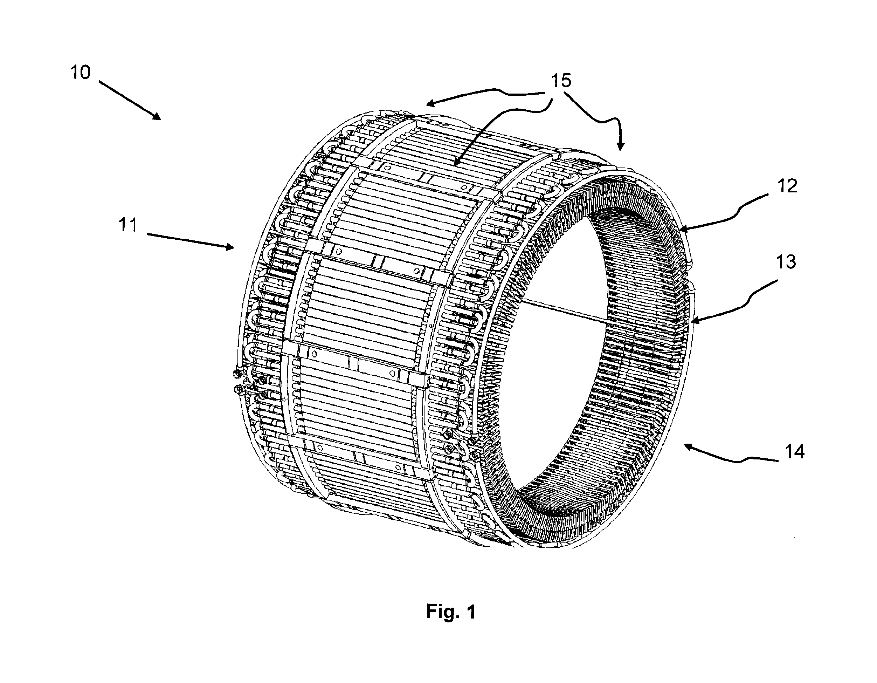

Fig. 1 zeigt eine perspektivische Seitenansicht eines erfindungsgemäßen Stators 10. Der Stator 10 ist ein Bauelement eines hier nicht näher dargestellten Generators zum Erzeugen von elektrischer Energie und wirkt hierzu mit einem hier ebenfalls nicht dargestellten Rotor zusammen.

Der Stator 10 weist einen Statorgrundkörper 11 auf. In dem hier gezeigten Ausführungsbeispiel umfasst der Stator 10 ein Statorblechpaket 12. Der Stator 10 und das Statorblechpaket 12 sind hier kreisringförmig ausgebildet. Alternativ sind auch andere Formen denkbar, beispielsweise mit einem kubischen oder quaderförmigen Außenumriss.

Der Stator 10 bzw. das Statorblechpaket 12 weisen mehrere Blechlamellen 13 auf. Die Blechlamellen 13 sind im Wesentlichen parallel nebeneinander und eine Aufnahme 14 umgebend angeordnet. Die zylinderförmige Aufnahme 14 ist zur Aufnahme eines Rotors vorgesehen, der um eine Rotationsachse innerhalb der Aufnahme 14 drehbar ist.

Weiter umfasst der Stator 10 eine Kühlvorrichtung 15. Die Kühlvorrichtung 15 ist mindestens teilweise in dem Stator 10 bzw. in dem Statorgrundkörper 11 eingelassen bzw. eingebettet. Mittels der Kühlvorrichtung 15 sind der Stator 10 und/oder die Blechlamellen 13 und/oder hier nicht näher dargestellte Wickelköpfe kühlbar.

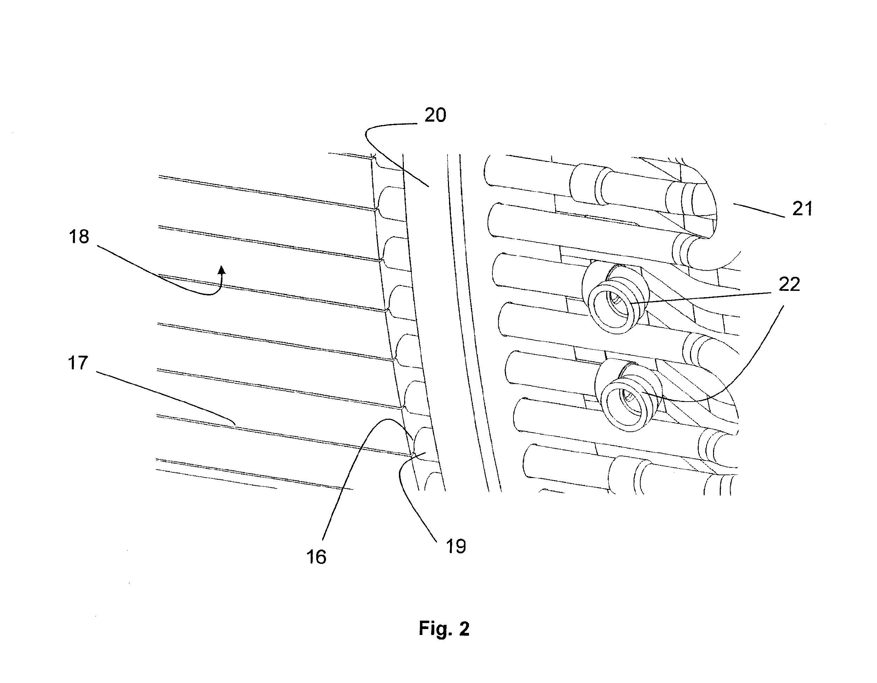

Der Aufbau der Kühlvorrichtung 15 wird anhand der Fig. 2 näher beschrieben.

Fig. 2 zeigt einen Ausschnitt einer perspektivischen Ansicht des erfindungsgemäßen Stators 10 gemäß Fig.1. Gleiche Gegenstände wie bei Fig. 1 tragen die gleichen Bezugszeichen. Insoweit wird auch auf die vorangehende Beschreibung verwiesen.

Die Kühlvorrichtung 15 weist in dem Statorgrundkörper 11 angeordnete Kühlkanäle 16 sowie Materiallücken auf. Die Materiallücken sind als Spalten 17 ausgebildet.

Die Kühlkanäle 16 sind in Längsrichtung des Stators 10 bzw. der zylinderförmigen Aufnahme 14 und von der Aufnahme 14 und/oder den frei stehenden Enden der Blechlamellen 13 abgewandt in dem Statorgrundkörper 11 angeordnet. Hierbei sind die Kühlkanäle 16 gleichmäßig um die Aufnahme 14 herum verteilt. Weiter sind die Kühlkanäle 16 im Wesentlichen parallel zueinander und nebeneinander angeordnet. Die Kühlkanäle 16 sind in dem hier gezeigten Ausführungsbeispiel mittels einer Bohrvorrichtung in den Statorgrundkörper 11 gebohrt worden. In den Kühlkanälen 16 sind Kühlleitungen 19 aufgenommen, die von dem Statorgrundkörper 11 bzw. dem Statormaterial umschlossen sind.

In dem hier gezeigten Ausführungsbeispiel sind die Kühlkanäle 16 jeweils mit dem gleichen Abstand von einer Außenseite 18 des Statorgrundkörpers 11 und/oder der Aufnahme 14 beabstandet.

Jeder Kühlkanal 16 weist im Bereich seines Außenumfangs bzw. jede Innenwand der Kühlkanäle 16 weist einen Spalt 17 in dem Statorgrundkörper 11 bzw. dem Statormaterial auf. Die Spalten 17 erstrecken sich in Längsrichtung der Kühlkanäle 16. Weiter verlaufen die Spalten 17 von den Innenseiten der Kühlkanäle 16 bis zur Außenseite 18 des Stators 10. In dem hier gezeigten Ausführungsbeispiel ist die Spalte 17 in dem Statorgrundkörper 11 als ein Luftspalt 17 ausgebildet.

In den Kühlkanälen 16 ist jeweils eine Kühlleitung 19 eingepasst bzw. eingewalzt. Die Kühlleitungen 19 sind in dem hier gezeigten Ausführungsbeispiel als Kupferrohre 19 ausgebildet. Weiter sind die Kühlleitungen 19 derart in den Kühlkanälen 16 angeordnet, dass die Kühlleitungen 19 in den Kühlkanälen 16 mittels eines Pressitzes fest gehalten sind. Jeweils ein Ende einer ersten Kühlleitung 19 tritt aus dem Kühlkanal 16 und/oder dem Statorgrundkörper 11 heraus.

In dem hier gezeigten Ausführungsbeispiel ist ein Ring 20 vorgesehen durch den die Kühlleitungen 19 jeweils mittels einer Bohrung geführt sind. In einer alternativen Ausführungsform kann auch die Bohrung des Rings 20 einen Spalt 17 aufweisen.

Mittels eines U-förmigen Umlenkstückes 21 ist eine erste Kühlleitung 19 mit einer zweiten Kühlleitung 19 verbunden. Mittels der frei liegenden Enden der Kühlleitungen 19 und/oder dem Umlenkstück 21 ist die den Stator 10 umgebende Luft mindestens teilweise kühlbar.

Weiter sind Anschlüsse 22 vorgesehen, mit denen die Kühlleitungen 19 und/oder die Kühlvorrichtung 15 mit einer Kühlmittelversorgung verbindbar ist.

Zugunsten einer besseren Übersichtlichkeit sind nicht alle Kühlkanäle 16, Spalten 17 und Kühlleitungen 19 mit Bezugszeichen versehen.

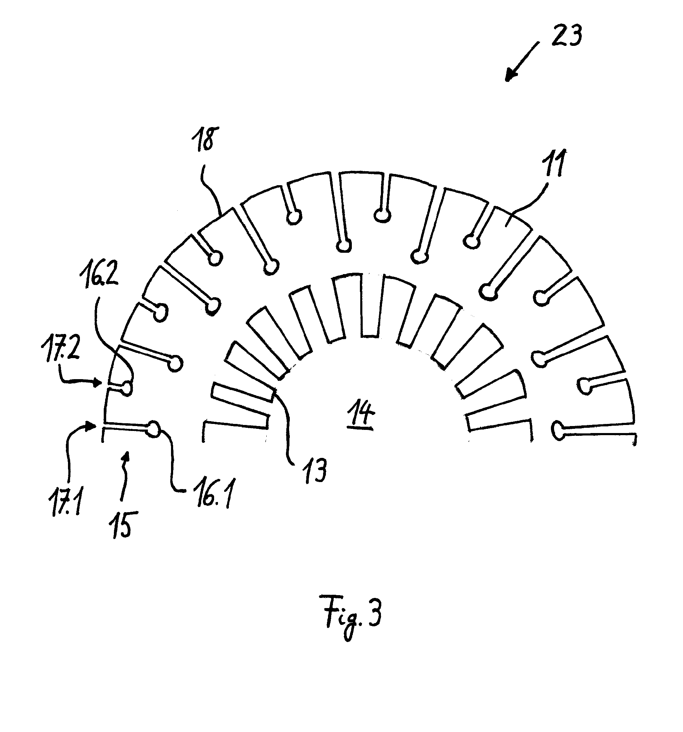

Fig. 3 zeigt einen Ausschnitt einer perspektivischen Ansicht eines weiteren erfindungsgemäßen Stators 23. Gleiche Gegenstände wie zuvor tragen die gleichen Bezugszeichen, insoweit wird auch auf die vorangegangene Beschreibung verwiesen.

In dem hier gezeigten Ausführungsbeispiel sind die Kühlkanäle 16 in erste Kühlkanäle 16.1 und zweite Kühlkanäle 16.2 unterteilt. Weiter sind auch die Spalten 17 in dem hier gezeigten Ausführungsbeispiel in erste Spalten 17.1 und zweite Spalten 17.2 unterteilt.

Die ersten Kühlkanäle 16.1 sind mit einem ersten Abstand von der Außenseite 18 beabstandet, während die zweiten Kühlkanäle 16.2 mit einem von dem ersten Abstand verschiedenen zweiten Abstand von der Außenseite 18 beabstandet sind. Hier ist der erste Abstand größer als der zweite Abstand.

Entsprechend weisen die ersten Spalten 17.1 jeweils ausgehend von der Außenseite 18 bis zu einem ersten Kühlkanal 17.1 eine größere Tiefe auf, als die zweiten Spalten 17.2 für die zweiten Kühlkanäle 17.2.

Nachfolgend wird die Erfindung anhand der Figuren 1 bis 3 näher erläutert:

Bei der Verwendung von einer metallischen Kühlleitung 19, beispielsweise aus Kupfer, in einem Stator 10, 23 wird bei der Verwendung des Stators 10, 23 in einem Generator zum Erzeugen elektrischer Energie die Kühlleitung 19 wie eine Wicklung von einem alternierenden Magnetfeld umgeben. Es besteht die Gefahr, dass Ströme in der Kühlleitung 19 induziert werden, die zu einem Energieverlust und damit zu einem geringeren Wirkungsgrad für den Generator führen.

Aufgrund des Spalts 17 ist die Kühlleitung 19 nicht vollständig in dem Statorgrundkörper 11 eingeschlossen bzw. nicht vollständig vom Statormaterial umschlossen. Der Spalt 17 ist jeweils als ein Luftspalt 17 ausgebildet, wodurch die Ausbildung eines die Kühlleitung 19 umgebenden Magnetfeldes gehemmt wird. Die magnetischen Flüsse können sich nicht mehr ungehindert um die Kühlleitung 19 herum schließen. Aufgrund des Spalts 17 sind die über den Spalt 17 hinweg übertragenen magnetischen Flüsse, insbesondere um eine Größenordnung, geringer als bei einem Stator 10 ohne Spalt 17. Hierdurch reduzieren sich die energetischen Verluste aufgrund der in der Kühlleitung 19 induzierten Ströme. Ein entsprechender Drehstromgenerator weist einen höheren Wirkungsgrad auf.

Dies ist beispielsweise für die Erzeugung von Strom aus erneuerbaren Energien, insbesondere mittels Windenergieanlagen, besonders vorteilhaft. Die Wirkungsgraderhöhung führt zu größeren Energieerträgen der Anlage. Da die Investitionskosten von der Leistung und den möglichen Energieerträgen der Anlage abhängig ist, führen größere Energieerträge zu geringeren Investitionskosten.

### Bezugszeichenliste

- 10: Stator
- 11: Statorgrundkörper
- 12: Statorblechpaket
- 13: Blechlamellen
- 14: Aufnahme
- 15: Kühlvorrichtung
- 16: Kühlkanal
- 17: Spalt
- 18: Außenseite
- 19: Kühlleitung
- 20: Ring
- 21: Umlenkstück
- 22: Anschluss
- 23: Stator

## Patentansprüche

1. Stator, insbesondere für einen Generator und/oder zum Zusammenwirken mit einem Rotor, mit einem Statorgrundkörper (11), und mit einer Kühlvorrichtung (15), die mindestens einen Kühlkanal (16) zum Kühlen des Statorgrundkörpers (11) und/oder von Statorwicklungen umfasst, wobei der Kühlkanal (16) in dem Statorgrundkörper (11) eingelassen und von Statormaterial des Statorgrundkörpers (11) umschlossen ist, **dadurch gekennzeichnet, dass** der Kühlkanal (16) im Bereich seines Außenumfangs einen Spalt (17) aufweist.

2. Stator nach Anspruch 1, **dadurch gekennzeichnet, dass** die Breite des Spalts (17) kleiner ist als der Durchmesser des Kühlkanals (16), wobei vorzugsweise die Breite des Spalts (17) kleiner als 10 mm, insbesondere kleiner als 5 mm, ist.

3. Stator nach Anspruch 1 oder 2, **dadurch gekennzeichnet, dass** der Kühlkanal (16), insbesondere beim Zusammenwirken mit einem Rotor, in einem magnetisch beeinflussbaren Bereich des Statorgrundkörpers (11) angeordnet ist.

4. Stator nach einem der vorhergehenden Ansprüche, **dadurch gekennzeichnet, dass** sich der Spalt (17), insbesondere über die gesamte in dem Statorgrundkörper (11) eingelassene Länge des Kühlkanals (16), in Längsrichtung des Kühlkanals (16) in dem Statorgrundkörper (11) erstreckt.

5. Stator nach einem der vorhergehenden Ansprüche, **dadurch gekennzeichnet, dass** sich der Spalt (17) von einer Innenseite des Kühlkanals (16) bis zu einer Außenseite (18) des Stators (10) erstreckt, und/oder dass in dem Kühlkanal (16) eine Kühlleitung (19), insbesondere aus Kupfer, für ein Kühlmittel angeordnet ist.

6. Stator nach einem der vorhergehenden Ansprüche, **dadurch gekennzeichnet, dass** der Statorgrundkörper (11) ein Statorblechpaket umfasst, das vorzugsweise eine, insbesondere zylinderförmige, Aufnahme (14) zum Anordnen eines Rotors aufweist, wobei vorzugsweise Blechlamellen (13) parallel zueinander um die Aufnahme (14) angeordnet sind.

7. Stator nach Anspruch 6, **dadurch gekennzeichnet, dass** der Kühlkanal (16) und/oder die Kühlleitung (19) in Axialrichtung zu einer Rotationsachse des Rotors angeordnet sind, und dass vorzugsweise die voneinander abgewandten Enden der Kühlleitung (19) aus dem Statorgrundkörper (11) austreten.

8. Stator nach einem der Ansprüche 6 oder 7, **dadurch gekennzeichnet, dass** der Spalt (17) an der von der Aufnahme (14) abgewandten Seite des Kühlkanals (16) und/oder der Kühlleitung (19), insbesondere radial nach außen gerichtet, angeordnet ist.

9. Generator, insbesondere Drehstromgenerator, zum Erzeugen von elektrischer Energie mit einem Stator (10, 23) nach einem der vorhergehenden Ansprüche und mit einem mit dem Stator (10, 23) zusammenwirkenden Rotor.

10. Drehstrommaschine, insbesondere Windenergieanlage, mit einem Generator nach Anspruch 9.
